# EUROPEAN PATENT APPLICATION

(11) **EP 4 726 556 A1**
(43) Date of publication of application: **15.04.2026**
(21) Application number: 25169755.3
(22) Date of filing: 10.04.2025
(51) Int. Cl.: G06F 12/08, G06F 12/122, G06F 9/50, G06F 12/127, G06F 12/0888

(54) **PAGE PLACEMENT METHOD AND DEVICE, ELECTRONIC APPARATUS, STORAGE MEDIUM AND PROGRAM PRODUCT**

(30) Priority: 12.10.2024 CN 202411426194; 24.03.2025 US 202519088252
(71) Applicant: Samsung Electronics Co., Ltd., Suwon-si, Gyeonggi-do 16677 (KR)
(72) Inventor: XUE, Ni, XiAn, Shaanxi (CN); ZHAO, Zhixue, XiAn, Shaanxi (CN)
(74) Representative: Kuhnen & Wacker Patent- und Rechtsanwaltsbüro PartG mbB

(57) **Abstract**

A page placement method includes migrating a page of plural pages of an application in a system based on a page temperature and a quality of service (QoS) parameter of the application in the system, in response to detecting a trigger event for performing a page migration. The trigger event includes an event affecting a performance of the system. The pages are divided into a hot page and a cold page according to a temperature, and a page having a higher frequency of access has a hotter temperature. The system includes memory devices, the page is migrated from an original memory device in which the page is originally placed to a new memory device, and an access speed of the original memory device is different from an access speed of the new memory device.

## Description

### CROSS REFERENCE TO RELATED APPLICATIONS

This application is based on and claims priority to Chinese Patent Application No. 202411426194.1, filed on October 12, 2024 in the State Intellectual Property Association of China, the contents of which being incorporated by reference herein in its entirety.

### BACKGROUND

The present disclosure relates to a field of computer technology, and more particularly, relates to a page placement method and device, an electronic apparatus, a storage medium and a program product.

Compute Express Link (CXL) technology can maintain memory consistency between a memory space of a Central Processing Unit (CPU) and a device memory, so as to achieve resource sharing to achieve high performance, and can also reduce complexity of a software stack and an overall system cost.

In the related art, an operating system-level application transparent Page Placement Mechanism (TPP) is proposed for a CXL tiered memory. The TPP uses a Least Recently Used (LRU) mechanism to identify cold and hot pages contained in applications and place the cold and host pages in appropriate memory layers.

### SUMMARY

It is an aspect to provide a page placement method and device, an electronic apparatus, a storage medium and a program product to address disadvantages with a page migration method in the relate art that may cause performances of different applications to be imbalanced.

According to an aspect of one or more embodiments, there is provided a page placement method comprising migrating a page of a plurality of pages of an application in a system based on a page temperature and a quality of service (QoS) parameter of the application in the system, in response to detecting a trigger event for performing a page migration, the trigger event comprising an event affecting a performance of the system. The plurality of pages of the application are divided into a hot page and a cold page according to a temperature, and a page having a higher frequency of access has a hotter temperature, the system comprises a plurality of memory devices, the page is migrated from an original memory device in which the page is originally placed to a new memory device, among the plurality of memory devices, and an access speed of the original memory device is different from an access speed of the new memory device.

According to another aspect of one or more embodiments, there is provided a page placement device comprising a memory and a processor configured to implement a page migration module configured to perform the page migration to migrate a page among a plurality of pages of an application in a system based on a page temperature and a QoS parameter of the application in the system, in response to detecting a trigger event for performing the page migration, the trigger event comprising an event affecting a performance of the system. The plurality of pages of the application are divided into a hot page and a cold page according to a temperature, a page having a higher frequency of access has a hotter temperature; the system comprises a plurality of memory devices, and the page migration comprises migrating the page from an original memory device in which the page is originally placed to a new memory device, an access speed of the original memory device being different from an access speed of the new memory device.

According to yet another aspect of one or more embodiments, there is provided an electronic apparatus comprising a memory that stores storing instructions for implementing the page placement method described above; and at least one processor configured to access the memory and execute the instructions to cause the at least one processor to execute the page placement method.

According to still another aspect of one or more embodiments, there is provided a computer readable storage medium storing instructions which, when executed by a processor an electronic apparatus, cause the processor of the electronic device to execute the page placement method described above.

According to still another aspect of one or more embodiments, there is provided a computer program product including a computer program, wherein the computer program, when executed by a processor, implement the page placement method described above.

### BRIEF DESCRIPTION OF DRAWINGS

The drawings here are incorporated into the description and constitute a part of the description, illustrate various embodiments conforming to the present disclosure, explain a principle of the present disclosure together with the description, and do not constitute inappropriate definition for the present disclosure.
FIG. 1 is a flowchart illustrating a page placement method according to an exemplary embodiment;
FIG. 2 is a schematic diagram illustrating a tiered memory system according to an exemplary embodiment;
FIG. 3 is a schematic diagram illustrating a process for application performance of a quality of service (QoS) analysis according to an exemplary embodiment;
FIG. 4 is a schematic diagram illustrating a least recently used (LRU) mechanism page management method in the related art;
FIG. 5 is a schematic diagram illustrating an application-level LRU page management method according to an exemplary embodiment;
FIG. 6 is a schematic diagram illustrating "PID-Application Mapping Table" according to an exemplary embodiment;
FIG. 7 is a flowchart illustrating an implementation of initial page allocation according to an exemplary embodiment;
FIG. 8 is a flowchart illustrating an implementation of hot page promotion migration according to an exemplary embodiment;
FIG. 9 is a flowchart illustrating an implementation of demoting cold page demotion from a local DRAM to a CXL memory device according to an exemplary embodiment;
FIG. 10 is a flowchart illustrating an implementation of demoting cold page demotion from a CXL memory device to a swap device according to an exemplary embodiment;
FIG. 11 is a block diagram illustrating a page placement device according to an exemplary embodiment; and
FIG. 12 is a block diagram of an electronic apparatus according to an exemplary embodiment.

### DETAILED DESCRIPTION

As discussed above, in the related art, the operating system-level application transparent Page Placement Mechanism (TPP) is proposed for the CXL tiered memory and uses the Least Recently Used (LRU) mechanism to identify cold and hot pages contained in applications and place the cold and hot pages in appropriate memory layers.

However, in the related art, while performing a page migration, only the heat and cold of a page is considered, i.e., the page migration is agnostic to an application. Therefore, performances of some applications whose performances are already good may be improved senselessly, or performances of some applications whose performances are already poor may be reduced improperly. Accordingly, a page migration method in the relate art may cause performances of different applications to be imbalanced.

It is an aspect to provide a page placement method and device, an electronic apparatus, a storage medium and a program product to address these disadvantages with the page migration method in the relate art that may cause performances of different applications to be imbalanced.

According to various embodiments, there is provided a page placement method including migrating a page of an application in a system based on a page temperature and a quality of service (QoS) parameter of the application in the system, in response to detecting a trigger event for performing a page migration, wherein the trigger event comprises an event affecting a performance of the system; wherein, the page of the applicant is divided into a hot page and a cold page according to a temperature, and the higher a frequency of access to a page, the hotter a temperature of the page; and wherein, the system includes a plurality of memory devices, the page migration includes migrating a page from an original memory device in which it is originally placed to another new memory device for placement, and an access speed of the original memory device is different from that of the new memory device.

In some exemplary embodiments, the migrating of the page of the application in the system based on the page temperature and the QoS parameter of the application in the system may include determining a current running performance state of each application in the system to obtain an abnormal performance parameter for evaluating a performance state of the each application, based on the QoS parameter corresponding to the each application; determining a target application on which the page migration is to be performed, based on the abnormal performance parameter of the each application; and migrating a page of the target application based on a page temperature in the target application.

In some exemplary embodiments, the preset trigger event may include a performance of the application in the system dropping; and the migrating of the page of the target application based on the page temperature in the target application may include migrating a hot page in the target application from the original memory device to the new memory device having a higher access speed than the original memory device for placement, wherein the target application is an application having the abnormal performance parameter greater than or equal to a preset threshold.

In some exemplary embodiments, the preset trigger event may include a remaining available space of the memory device of the system being insufficient; and the migrating of the page of the target application based on the page temperature in the target application may include migrating a cold page of the target application in a memory device having an insufficient remaining available space from the original memory device to the new memory device having a lower access speed than the original memory device for placement, wherein the target application is an application having the abnormal performance parameter lower than a preset threshold.

In some exemplary embodiments, the page placement method may further include for each application among at least one application in the system, performing page temperature identification on the each application to obtain a hot page list and a cold page list of the each application, wherein the hot page list contains hot pages of the application, and the cold page list contains cold pages of the application.

In some exemplary embodiments, the performing page temperature identification on the each application may include determining whether each of the plurality of pages of a single application is a hot page or a cold page, based on temperatures of the plurality of pages contained in the single application.

In some exemplary embodiments, the page placement method may further include determining a number of pages to be migrated based on a degree of performance drop of the system, wherein the degree of the performance drop of the system is positively correlated with the number of pages to be migrated.

In some exemplary embodiments, the page placement method may further include in the case where it is detected that there is an initial page to be allocated to a memory device, allocating the initial page based on a QoS parameter of an application to which the initial page belongs and a type of the initial page.

In some exemplary embodiments, the allocating the initial page based on the QoS parameter of the application to which the initial page belongs and the type of the initial page may include determining whether the type of the initial page is an anonymous type; in the case where the type of the initial page is the anonymous type, allocating the initial page to a first memory device contained in the system for placement, wherein the first memory device is a memory device having an access speed higher than a setting among the plurality of memory devices; and otherwise, allocating the initial page based on the QoS parameter of the application to which the initial page belongs. In some exemplary embodiments, the first memory device may be predetermined. In some exemplary embodiments, the setting may be predetermined.

In some exemplary embodiments, the allocating the initial page based on the QoS parameter of the application to which the initial page belongs may include determining a current running performance state of the application to which the initial page belongs to obtain an abnormal performance parameter for evaluating a performance state of the application to which the initial page belongs, based on the QoS parameter of the application to which the initial page belongs; allocating the initial page to the first predetermined memory device for placement, in the case where the abnormal performance parameter of the application to which the initial page belongs is greater than or equal to a preset threshold; and otherwise, allocating the initial page to a second predetermined memory device contained in the system for placement, wherein the second predetermined memory device is a memory device having an access speed lower than the predetermined setting among the plurality of memory devices.

According to various embodiments, there is provided a page placement device including a page migration module configured to migrate a page of an application in a system based on a page temperature and a QoS parameter of the application in the system, in response to detecting a preset trigger event for performing the page migration, wherein the preset trigger event comprises an event affecting a performance of the system; wherein, the page of the applicant is divided into a hot page and a cold page according to a temperature, and the higher a frequency of access to a page, the hotter a temperature of the page; and wherein, the system includes a plurality of memory devices, the page migration includes migrating a page from an original memory device in which it is originally placed to another new memory device for placement, and an access speed of the original memory device is different from that of the new memory device.

In some exemplary embodiments, the page migration module may be configured to determine a current running performance state of each application in the system to obtain an abnormal performance parameter for evaluating a performance state of the each application, based on the QoS parameter corresponding to the each application; determine a target application on which the page migration is to be performed, based on the abnormal performance parameter of the each application; and migrate a page of the target application based on a page temperature in the target application.

In some exemplary embodiments, the preset trigger event may include a performance of the application in the system dropping; and the page migration module may be configured to migrate a hot page in the target application from the original memory device to the new memory device having a higher access speed than the original memory device for placement, wherein the target application is an application having the abnormal performance parameter greater than or equal to a preset threshold.

In some exemplary embodiments, the preset trigger event may include a remaining available space of the memory device of the system being insufficient; and the page migration module may be configured to migrate a cold page of the target application in a memory device having an insufficient remaining available space from the original memory device to the new memory device having a lower access speed than the original memory device for placement, wherein the target application is an application having the abnormal performance parameter lower than a preset threshold.

In some exemplary embodiments, the page placement device may further include a page temperature identification module configured to for each application among at least one application in the system, perform page temperature identification on the each application to obtain a hot page list and a cold page list of the each application, wherein the hot page list contains hot pages of the application, and the cold page list contains cold pages of the application.

In some exemplary embodiments, the page temperature identification module may be configured to determine whether each of the plurality of pages of a single application is a hot page or a cold page, based on temperatures of the plurality of pages contained in the single application.

In some exemplary embodiments, the page placement device may further include a number determining module configured to determine a number of pages to be migrated based on a degree of performance drop of the system, wherein the degree of the performance drop of the system is positively correlated with the number of pages to be migrated.

In some exemplary embodiments, the page placement device may further include a page allocation module configured to in the case where it is detected that there is an initial page to be allocated to a memory device, allocate the initial page based on a QoS parameter of an application to which the initial page belongs and a type of the initial page.

In some exemplary embodiments, the page allocation module may be configured to determine whether the type of the initial page is an anonymous type; in the case where the type of the initial page is the anonymous type, allocating the initial page to a first predetermined memory device contained in the system for placement, wherein the first predetermined memory device is a memory device having an access speed higher than a predetermined setting among the plurality of memory devices; and otherwise, allocating the initial page based on the QoS parameter of the application to which the initial page belongs.

In some exemplary embodiments, the page allocation module may be configured to determine a current running performance state of the application to which the initial page belongs to obtain an abnormal performance parameter for evaluating a performance state of the application to which the initial page belongs, based on the QoS parameter of the application to which the initial page belongs; allocate the initial page to the first predetermined memory device for placement, in the case where the abnormal performance parameter of the application to which the initial page belongs is greater than or equal to a preset threshold; and otherwise, allocating the initial page to a second predetermined memory device contained in the system for placement, wherein the second predetermined memory device is a memory device having an access speed lower than the predetermined setting among the plurality of memory devices.

According to various embodiments, there is provided an electronic device including: a processor; and a memory for storing instructions executable by the processor, wherein the processor is configured to execute the instructions to implement the page placement method according to the present disclosure.

According to various embodiments, there is provided a computer readable storage medium, wherein instructions in the computer readable storage medium, when executed by a processor, enable an electronic apparatus to execute the page placement method according to the present disclosure.

According to various embodiments, there is provided a computer program product including a computer program, wherein the computer program, when executed by a processor, implement the page placement method according to the present disclosure.

The technical solutions provided by the various embodiments of the present disclosure at least provide at least following advantageous effects.

In the present disclosure, while performing a page migration, not only a page temperature is considered, that is, not only whether a page is cold or hot is considered, but also a QoS parameter of an application is considered, that is, a service performance of the application is further considered, so that the application can perceive placement of the page. Accordingly, it is possible to avoid cases where performances of some applications are improved senselessly and where performances of some applications are reduced improperly due to a page migration method since only the page temperature is considered. That is, the page migration method provided by the present disclosure can ensure that performances of different applications are in a relatively balanced state.

According to various exemplary embodiments, cold and hot identification may be performed with respect to each application, so that hot pages and cold pages may be identified for each application, and then it is possible to ensure that each application may get a fairer opportunity to migrate hot pages to local DRAM, that is, each application may get a fairer opportunity to improve a performance.

According to various exemplary embodiments, a QoS parameter corresponding to an application may truly reflect a quality of service of the application, and the QoS of the application may objectively reflect a performance state of the application. For example, if a QoS level of an application is relatively high, it means that a performance state of the application is relatively good; and if a QoS level of an application is relatively low, it means that the performance state of the application is relatively poor. Thus, accuracy and credibility of determining a current running performance state of an application based on a QoS parameter of the application are relatively high. That is, the performance state of the application may be described more objectively and accurately through the QoS parameter corresponding to the application.

According to various exemplary embodiments, since a hot page belongs to a page having a high access frequency, migrating a hot page of an application of which a performance drops to a new memory device having a higher access speed may ensure improvement in the performance of the application.

According to various exemplary embodiments, demotion migration may be advantageously performed on cold pages of applications whose performances are already normal, and adverse effects on the corresponding applications due to the demotion migration may be minimized to further ensure that the performances of different applications are maintained at a relatively balanced level.

According to various exemplary embodiments, by making a degree of performance drop of a system positively correlated with the number of pages to be migrated, it is possible to ensure that a performance of an application whose performance drops may be improved as soon as possible; and it is possible to ensure that a remaining available space of a memory device reaches a preset requirement as soon as possible, and it is possible to further ensure that new page allocation/ hot page promotion migration /cold page demotion migration may proceed smoothly.

According to various exemplary embodiments, in the case where an access frequency of an initial page is relatively high, the initial page may be allocated to a memory device with a higher access speed for placement, so that it is possible to ensure that frequently accessed pages may be accessed quickly, that is, an access rate of a page with relatively high access frequency may be guaranteed to be at a high level.

According to various exemplary embodiments, in the case where a performance of an application to which the initial page belongs is relatively poor, the initial page may be allocated to a memory device with a higher access speed for placement to improve the performance of the application to which the initial page belongs; and in the case where the performance of the application to which the initial page belongs is relatively good, it is unnecessary to allocate the memory device with the higher access speed to the initial page, that is, at this moment, even if a memory device with a lower access speed is allocated to the initial page, the performance of the application to which the initial page belongs will not be adversely affected. Thus, it may be ensured that the performances of different applications are maintained at a relatively balanced level.

It should be understood that the above general description and the following detail description are merely exemplary and illustrative without limiting the present disclosure.

In order to enable those ordinarily skilled in the art to understand the technical solutions of the present disclosure better, hereinafter, various exemplary embodiments will be described clearly and completely in conjunction with the drawings.

It should be explained that terms "first", "second" and the like in the description and the claims as well as the drawings of the present disclosure are used to distinguish similar objects, and are not necessary to be used to describe specific order or sequence. It should be understood that the data used in this way can be interchanged under appropriate circumstances so that the embodiments described herein can be implemented in an order other than those illustrated or described herein. Implementation manners described in the following embodiments do not represent all of the implementation manners that are consistent with the present disclosure. On the contrary, they are merely examples of devices and methods consistent with some aspects of the present disclosure as described in detail in the appended claims.

It should be explained here that "at least one of several items" appearing in the present disclosure all means to include these three parallel situations of "any one of the several items", "a combination of any multiple of the several items", and "the totality of the several items". For example, a phrase of the form "including at least one of A and B" for example includes within its scope the following three parallel situations: (1) including A; (2) including B; and (3) including A and B. For another example, a phrase of the form "executing at least one of step 1 and step 2" for example includes within its scope the following three parallel situations: (1) executing step 1; (2) executing step 2; and (3) executing step 1 and step 2. Similarly, a phrase using the form "at least one of A, B, or C" includes within its scope "only A", "only B", "only C", "A and B", "A and C", "B and C" and "A, B, and C."

At present, data centers are facing many memory problems. Firstly, data-centric technologies and applications have an increasing demand for memory. Secondly, the number of Central Processing Unit (CPU) cores has grown rapidly, but a memory bandwidth and capacity of each CPU core have decreased. Previous tiered memory technologies, for example, adding a non-volatile memory on the basis of a local Dynamic Random Access Memory (DRAM), or adding a remote memory on the basis of a local DRAM, increase latency on the one hand and reduce a system performance on the other hand.

The emerging Compute Express Link (CXL) technology can maintain memory consistency between a CPU memory space and a device memory, so as to achieve resource sharing to achieve high performance, and can reduce complexity of a software stack and an overall system cost. Compared with previous memory expansion technology, CXL technology has a much smaller effect on a system performance, but still adds additional latency. Especially when a placement strategy of data between the local DRAM and the CXL memory device is not appropriate, application performance may drop significantly. In addition, in a multi-application scenario, unfair allocation of memory resources may lead to unbalanced performance drop between applications. The related art memory system allocates memory to each application according to demand without considering the performance drop of the application due to competition for memory.

In the related art, an operating system-level application transparent Page Placement Mechanism (TPP) is proposed for a CXL tiered memory. The TPP uses a Least Recently Used (LRU) technology to identify cold and hot pages and place the hot and cold pages in appropriate memory layers. The TPP supports active demotion of pages from a local DRAM to a CXL memory device to ensure that sufficient memory space is allocated for new pages. The TPP may promote hot pages captured in the CXL memory device to the local DRAM.

There are mainly following disadvantages in the page migration method in the related art:

### (1) Page migration is agnostic to an application.

In the related art, when a page is migrated between a local DRAM and a CXL memory device, only the hot and cold of the page is considered, but a performance of an application is ignored. That is, the page migration method provided in the related art is agnostic to the application. At this time, hot pages of an application whose performance is already good may be migrated from the CXL memory device to the local DRAM. However, since the performance of the application is already good, it is not of much value to perform page promotion on the application whose performance is already good, that is, meaningless page migration will happen. In some exemplary embodiments, cold pages of an application whose performance already dropped severely may also be migrated from the local DRAM to the CXL memory device, and this will cause the performance of the application whose performance is already poor to drop inappropriately.

### (2) There is lack of fairness in page temperature identification.

In the related art, pages of all applications are placed together for cold and hot identification. However, the hot and cold pages of different applications may vary greatly. For example, if some applications belong to hot applications, pages contained in the applications may all be identified as hot pages; and if some applications belong to cold applications, pages contained in the applications may all be identified as cold pages. At this time, for those cold applications, since all the pages contained therein may be identified as cold pages, all the pages contained in the applications will lose an opportunity to be migrated to the local DRAM with a higher access speed, and further, it will lead to a significant drop in the performances of the applications.

### (3) An overhead for data migration is relatively large.

In the related art, only one page is migrated during each page migration, and this one page migration will cause an excessive page migration overhead.

In order to address such a disadvantage that "(1) Page migration is agnostic to an application" in the related art, various embodiments perform a page migration according to a page temperature and a quality of service (QoS) of an application. For example, when a performance of an application is dropping, hot pages in a CXL memory device will be migrated to a local DRAM with a higher access speed; when an over provisioning memory (OPM) of the local DRAM is insufficient, cold pages in a local DRAM of an application with a normal performance will be migrated to a CXL memory with a lower access speed; and when an OPM of the CXL memory device is insufficient, cold pages in the CXL memory device of the application with the normal performance will be migrated to a swap device with a lower access speed.

In this way, while performing a page migration, not only a page temperature is considered, that is, not only whether a page is hot or cold is considered, but also a QoS parameter of an application is considered, that is, a service performance of the application is further considered, so that the application can perceive placement of the page. It is possible to avoid cases where performances of some applications are improved senselessly and where performances of some applications are reduced improperly due to the page migration method since only the page temperature is considered. That is, the page migration method provided by the present disclosure can ensure that the performances of different applications are in a relatively balanced state. Meanwhile, a QoS of a system may be further improved.

In order to address such a disadvantage that "(2) There is lack of fairness in page temperature identification" in the relate art, various embodiments provide an LRU-based application-level page temperature identification method, that is, cold and hot identification is performed on pages of each application. In this way, hot pages and cold pages may be identified for each application, and then it is possible to ensure that each application may get a fairer opportunity to migrate hot pages to local DRAM, that is, each application may get a fairer opportunity to improve a performance.

In order to address such a disadvantage that "(3) An overhead for data migration is relatively large" in the related art, various embodiments make a degree of performance drop of the system positively correlated with a number of pages to be migrated, that is, a plurality of pages may be migrated during one migration, and this may realize reduction in a migration overhead and improvement in memory management efficiency. Meanwhile, various embodiments may also ensure that a performance of an application whose performance is dropping is improved as soon as possible; and it is possible to ensure that a remaining available space of a memory device reaches a preset requirement as soon as possible, and it is possible to further ensure that new page allocation/hot page promotion migration /cold page demotion migration may proceed smoothly.

Various exemplary embodiments will now be described with reference to the drawings.

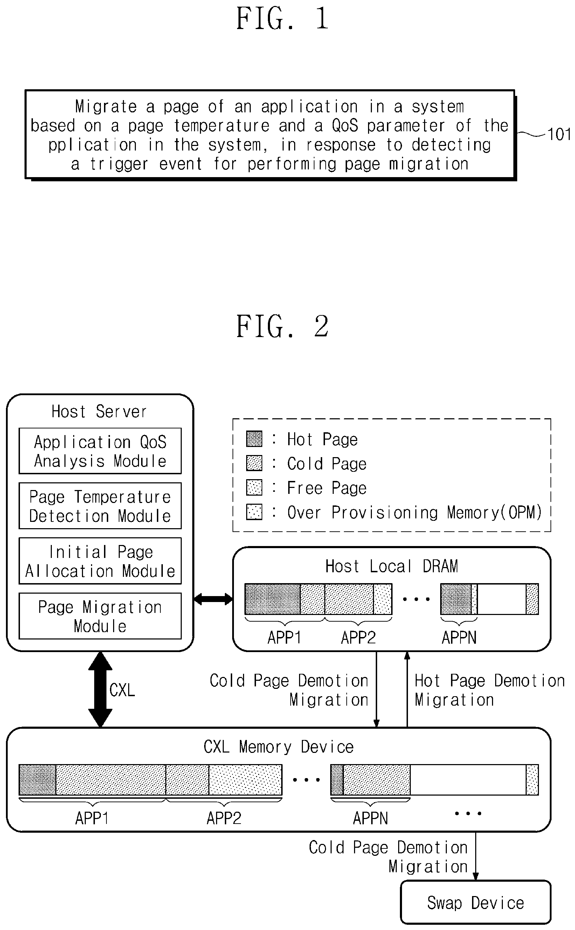

FIG. 1 is a flowchart illustrating a page placement method according to an exemplary embodiment.

Referring to FIG. 1, in step 101, a page of an application in a system may be migrated based on a page temperature and a quality of service (QoS) parameter of the application in the system, in response to detecting a trigger event for performing a page migration, wherein the trigger event includes an event affecting a performance of the system. In some exemplary embodiments, the trigger event may be preset. Performing the page migration aims to improve or maintain a system performance. For example, when a system performance is found to be dropping or about to drop, the system performance is improved or maintained by performing the page migration. Pages of the applicant are divided into hot pages and cold pages according to a temperature, and the higher a frequency of access to a page, the hotter a temperature of the page.

The system may include a plurality of memory devices, the page migration may include migrating a page from an original memory device in which it is originally placed to a new memory device for placement, and an access speed of the original memory device is different from that of the new memory device. In some exemplary embodiments, the system may include three memory devices, that is, a local DRAM, a CXL memory device and a swap device, respectively. In some exemplary embodiments, an access speed of the local DRAM is higher than that of the CXL memory device, and an access speed of the CXL memory device is higher than that of the swap device.

According to an exemplary embodiment, the page migration may be performed according to a page temperature and an application performance. In some exemplary embodiments, a current running performance state of each application in the system is determined to obtain an abnormal performance parameter for evaluating a performance state of the each application, based on the QoS parameter corresponding to the each application. For example, QoS indicators of all applications may be monitored in real time and specific values are recorded in a QoS information table. For each application, an isolation forest model may be established based on historical QoS data contained in the QoS information table of the application, and further current QoS data of each application may be input to the corresponding isolation forest model, and a current abnormal performance parameter of the application may be obtained. In some exemplary embodiments, the abnormal performance parameter may be an anomaly score. In some exemplary embodiments, the abnormal performance parameter may be other types of parameters for representing an application performance in addition to an anomaly score. However, exemplary embodiments are not limited thereto, and the above-described embodiments are merely for exemplary illustration.

In some exemplary embodiments, in addition to an isolation forest model, other models may be further established to determine a current performance of an application. However, exemplary embodiments are not limited thereto, and the above-described embodiments are merely for exemplary illustration.

A target application on which the page migration is to be performed may be determined, based on the abnormal performance parameter of the each application. Next, a page of the target application may be migrated based on a page temperature in the target application.

In this way, a QoS parameter corresponding to an application may truly reflect a quality of service of the application, and the QoS of the application may objectively reflect a performance state of the application. For example, if a QoS level of an application is relatively high, it means that a performance state of the application is relatively good; and if a QoS level of an application is relatively low, it means that the performance state of the application is relatively poor. Thus, accuracy and credibility of determining a current running performance state of an application based on a QoS parameter of the application are relatively high. That is, the performance state of the application may be described more objectively and accurately through the QoS parameter corresponding to the application.

In some exemplary embodiments, the page migration can be divided into two scenarios, that is: "a page promotion migration scenario in which pages are migrated to a new memory device with a higher access speed", and "a page demotion migration scenario in which pages are migrated to a new memory device with a lower access speed". Below, these two page migration scenarios will be illustrated separately.

According to an exemplary embodiment, the trigger event includes a performance of the application in the system dropping. For example, in the case where an abnormal performance parameter of a certain application is greater than or equal to a threshold, it may be considered that performance drop of the application happens. At this time, hot pages in the target application may be migrated from an original memory device to a new memory device having a higher access speed than the original memory device for placement, wherein the target application is an application having the abnormal performance parameter greater than or equal to the threshold. In some exemplary embodiments, the trigger event may be preset. In some exemplary embodiments, the threshold event may be preset.

In some exemplary embodiments, the original memory device may be a CXL memory device, and the new memory device may be a local DRAM. When performance drop of an application is detected, hot pages of the application stored in the CXL memory device may be migrated to the local DRAM. The above-described "drop" scenario may be further specifically refined to a "plunge" scenario, wherein "plunge" refers to a sudden and rapid drop in a performance of an application within a short time. In this way, since a hot page belongs to a page having a higher access frequency, migrating a hot page of an application whose performance drops to a new memory device having a higher access speed may ensure improvement in the performance of the application.

According to an exemplary embodiment, hot page promotion migration may be performed in an iterative manner. Specifically, for each iteration process, following operations may be performed:
At the beginning of this iteration, N hot pages may be selected from hot pages contained in a target application and stored in an original memory device. Then, a first available space may be allocated in a new memory device. Next, the N hot pages may be promoted from the original memory device to the first available space, and whether a performance of the target application is improved may be detected. In the case where it is detected that the performance of the target application is not improved, a next iteration of this iteration may be entered until the performance of the target application returns to normal; otherwise, it may be determined that the iteration is terminated.

In some exemplary embodiments, in addition to performing the hot page promotion migration in the iterative manner, other manners may be further used to perform the hot page promotion migration. However, exemplary embodiments are not limited thereto, and the above-described iterative manner is merely for exemplary illustration.

According to an exemplary embodiment, during each iteration, if the number of hot pages contained in the target application and stored in the original memory device is less than N, several cold pages may be selected from a cold page list of the target application to supplement the insufficient number.

According to an exemplary embodiment, each application may have a hot page list and a cold page list, respectively. The hot page list may contain multiple hot pages whose temperatures are sequentially reduced, and the cold page list may contain multiple cold pages whose temperatures are sequentially reduced, and the temperatures of the hot pages contained in the hot page list are all higher than the temperatures of the cold pages contained in the cold page list. After promoting the N hot pages from the original memory device to the first available space during each iteration, N cold pages arranged at a head of the cold page list of the target application may also be supplemented to an end of the hot page list of the target application.

According to an exemplary embodiment, after promoting the N hot pages from the original memory device to the first available space during each iteration, the N hot pages stored in the original memory device may be further recycled. In this way, after the hot pages are promoted, the hot pages in the original memory device may be recycled, that is, the hot pages originally placed in the original memory device may be deleted, and this recycling may avoid repeated occupation of the same hot pages of the memory space, in order to save memory resources.

According to an exemplary embodiment, the number of the above-described target applications may be multiple, that is, there may be multiple applications with dropped performances. At this time, multiple target applications may be sorted in an order of isolation forest anomaly scores from large to small, that is, multiple target applications may be sorted in an order of degrees of performance drop from large to small. Then, the page promotion migration may be performed on each sorted application one by one by starting from an application with the highest isolation forest anomaly score. That is, for each sorted target application, the promotion migration may be performed on all hot pages contained in each application through the iterative manner until the iteration is terminated.

In some exemplary embodiments, the higher the isolation forest anomaly score, the more sever the degree of the performance drop of the corresponding application, and the more urgent the need for performing the page promotion migration on the corresponding application. Therefore, starting from the application with the highest isolation forest anomaly score, the page promotion migration may be performed on each sorted target application one by one, and this may ensure that the promotion migration may be advantageously performed on the application with the most severe performance drop, that is, it may ensure that performance improvement may be advantageously performed on the application with the most severe performance drop, to avoid the situation where the application with the most severe performance drop has not got an opportunity for performance improvement for a long time, and further it may ensure that the performances of different applications are maintained at a relatively balanced level.

According to an exemplary embodiment, the trigger event may further include a remaining available space of a memory device in a system being insufficient. At this time, cold pages of a target application in a memory device with an insufficient remaining available space may be migrated from an original memory device to a new memory device having a lower access speed than the original memory device for placement, wherein the target application may be an application with an abnormal performance parameter lower than a threshold, and the target application may be an application with a normal performance. In some exemplary embodiments, the trigger event may be preset. In some exemplary embodiments, the threshold event may be preset.

In some exemplary embodiments, in the case where a remaining available space of a local DRAM is insufficient, cold pages of a target application in the local DRAM with an insufficient remaining available space may be migrated from the local DRAM to a CXL memory device having a lower access speed than the local DRAM for placement; or in the case where a remaining available space of the CXL memory device is insufficient, cold pages of a target application in the CXL memory device with an insufficient remaining available space may be migrated from the CXL memory device to a swap device having a lower access speed than the CXL memory device for placement.

In some exemplary embodiments, since the page demotion migration is to be performed in the case where a remaining available space of a memory device in the system is insufficient, that is, the pages need to be migrated to a memory device with a lower access speed, this migration to the memory device with the lower access speed is bound to lead to the performance drop of the corresponding application. Therefore, it is necessary to select a page migration strategy that has the least effect on an application performance. Specifically, compared to performing page demotion migration on an application whose performance is already poor, performing the page demotion migration on an application whose performance is already normal has a less adverse effect on the corresponding application; and, since an access frequency of a cold page is less than that of a hot page, an adverse effect on the corresponding application caused by the demotion migration on the cold page is less than the adverse effect on the corresponding application caused by the demotion migration on the hot page. Thus, various exemplary embodiments may perform demotion migration advantageously on cold pages of an application whose performance is already normal, and adverse effects on the corresponding application due to the demotion migration may be minimized to further ensure that the performances of different applications are maintained at a relatively balanced level.

According to an exemplary embodiment, a cold page of a target application in a memory device with an insufficient remaining available space may be migrated from an original memory device to a new memory device having a lower access speed than the original memory device for placement, and the cold page of the target application stored in the original memory device may be further recycled. In this way, after the cold page is demoted, the cold page in the original memory device may be recycled, that is, the cold page originally placed in the original memory device may be deleted, and this may avoid repeated occupation of the same cold page of the memory space, in order to save memory resources.

According to an exemplary embodiment, the number of the above-described target applications may be multiple, that is, there may be multiple applications with normal performances. At this time, the multiple target applications may be sorted in an order of isolation forest anomaly scores from small to large, that is, the multiple target applications may be sorted in an order of degrees of normal performances from large to small. Then, the page demotion migration may be performed on each sorted target application one by one by starting from an application with the lowest isolation forest anomaly score, until a size of the remaining available space of the original memory device satisfies a threshold. In some exemplary embodiments, the threshold event may be a preset requirement.

In some exemplary embodiments, the lower the isolation forest anomaly score, the more normal the performance of the corresponding application, and the less the adverse effect brought by the page demotion migration on the application. Therefore, the page demotion migration may be performed on each sorted target application one by one by starting from an application with the lowest isolation forest anomaly score, that is, the page demotion migration may be performed on each sorted target application by starting from an application with a most normal performance, and this may avoid the occurrence of the case where sharp deterioration in performances of applications caused by directly performing the page demotion migration on some applications whose performances are already poor, to further ensure that the performances of different applications are maintained at a relatively balanced level.

FIG. 2 is a schematic diagram illustrating a tiered memory system according to an exemplary embodiment. Referring to FIG. 2, the tiered memory system may include a local DRAM of a host and a CXL memory device connected to the host using a CXL protocol. In some embodiments, a host server may include four modules, that is: an " Application QoS Analysis Module", a " Page Temperature Detection Module", an " Initial Page Allocation Module" and a " Page Migration Module".

For a system having a plurality of applications, a system QoS is affected by the QoS of each application, and a performance plunge of any application will reduce the system QoS. The "application QoS analysis module" may detect whether a performance plunge happens to an application in real time. As described above, QoS indicators of all applications may be monitored in real time and specific values are recorded in a QoS information table. The QoS indicators may vary according to the application, and the QoS may include but be not limited to: a throughput, a bandwidth, and/or read/write latency, etc. For each application, an isolation forest model may be established based on historical QoS data of the application, and further whether there is a performance plunge in the application is detected based on the isolation forest model corresponding to the application and current QoS data of the application.

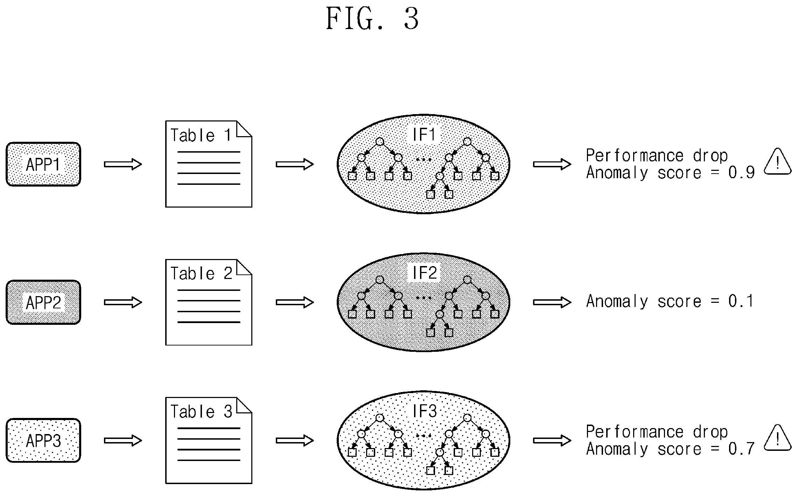

FIG. 3 is a schematic diagram illustrating a process for application performance QoS analysis according to an exemplary embodiment. Referring to FIG. 3, there are illustrated three APPs, that is, APP1, APP2 and APP3, respectively. Each APP corresponds to its own historical QoS info. table, and based on multiple historical QoS data contained in a historical QoS info. table corresponding to each APP, an isolation forest (IF) model corresponding to the APP may be established. Then, current QoS data of each APP may be input to the corresponding IF, and a current abnormal performance parameter of the APP may be obtained. For example, in some exemplary embodiments, the abnormal performance parameter may be an anomaly score for evaluating a performance state of each application. Referring to FIG. 3, an anomaly score corresponding to APP1 is 0.9; an anomaly score corresponding to APP2 is 0.1; and an anomaly score corresponding to APP3 is 0.7.

According to an exemplary embodiment, a number of pages to be migrated may be determined based on a degree of performance drop of the system, wherein the degree of the performance drop of the system is positively correlated with the number of pages to be migrated.

In some exemplary embodiments, in a scenario where a performance of an application in a system drops, a number N of hot pages on which page promotion migration is performed may be selected according to a degree of performance drop of the application. For example, if the degree of performance drop is not severe, N may be set to 4; if the degree of performance drop is very severe, N may be set to 8, and the like. In an embodiment, in a scenario where a remaining available space of a memory device in the system is insufficient, a number M of cold pages on which page demotion migration is performed may be selected according to a consumption degree of a memory space of an original memory device. For example, if the consumption of the memory space is not severe, M may be set to 4; if the consumption of the memory space is very severe, M may be set to 8, and the like.

In this way, by making a degree of performance drop of a system positively correlated with the number of pages to be migrated, it is possible to ensure that a performance of an application whose performance drops may be improved as soon as possible; and it is possible to ensure that a remaining available space of a memory device reaches a threshold as soon as possible, and it is possible to further ensure that new page allocation/hot page promotion migration /cold page demotion migration may proceed smoothly.

In some exemplary embodiments, an existing LRU technology of Linux may help to detect hot pages and cold pages. The LRU technology maintains an active list for storing pages accessed frequently and an inactive list for storing pages accessed rarely.

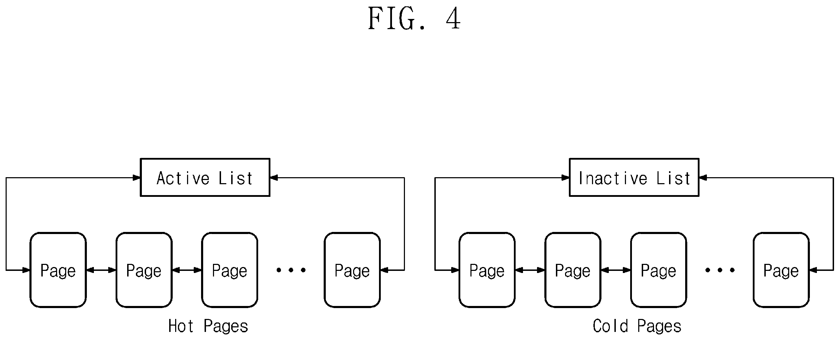

FIG. 4 is a schematic diagram illustrating a traditional LRU mechanism page management method in the related art. Accordingly, in the related art, an active list and an inactive list of an LRU mechanism both include pages of all applications, thus, pages of a designated application cannot be migrated based on the mechanism.

Referring to FIG. 4, when a page is accessed, if the page is in the active list, a PG_referenced parameter of the page may be set to 1; if the page is in the inactive list and the PG_referenced is 0, the PG_referenced may be set to 1; if the page is in the inactive list and the PG_referenced is 1, the page may be moved to the active list and the PG_referenced will be set to 0. Further, when page elimination is started, pages may be eliminated from an end of the inactive list. In some exemplary embodiments, for a certain page, if PG_referenced of the page is 1, the page may be skipped, and the PG_referenced of the page may be set to 0; if the PG_referenced of the page is 0, the page may be moved out to a swap device.

However, in an exemplary embodiment, there is provided a method of identifying a page temperature of an application based on an LRU technology at an application level. That is, for each application among at least one application in a system, page temperature identification may be performed on each application to obtain a hot page list and a cold page list of each application, wherein the hot page list contains hot pages of the application, and the cold page list contains cold pages of the application.

According to an exemplary embodiment, whether each of a plurality of pages of a single application is a hot page or a cold page is determined based on temperatures of the plurality of pages contained in the single application. In some exemplary embodiments, a median of a plurality of temperatures corresponding to the plurality of pages may be determined, and pages of which the temperatures are lower than the median may be determined as cold pages; and pages of which the temperatures are higher than the median may be determined as hot pages. In some exemplary embodiments, a temperature threshold may be further set, and pages of which the temperatures are lower than the temperature threshold are determined as cold pages; and pages of which the temperatures are higher than the temperature threshold may be determined as hot pages. The specific method for cold and hot page identification is not limited, and the above-described embodiments are only for exemplary illustration.

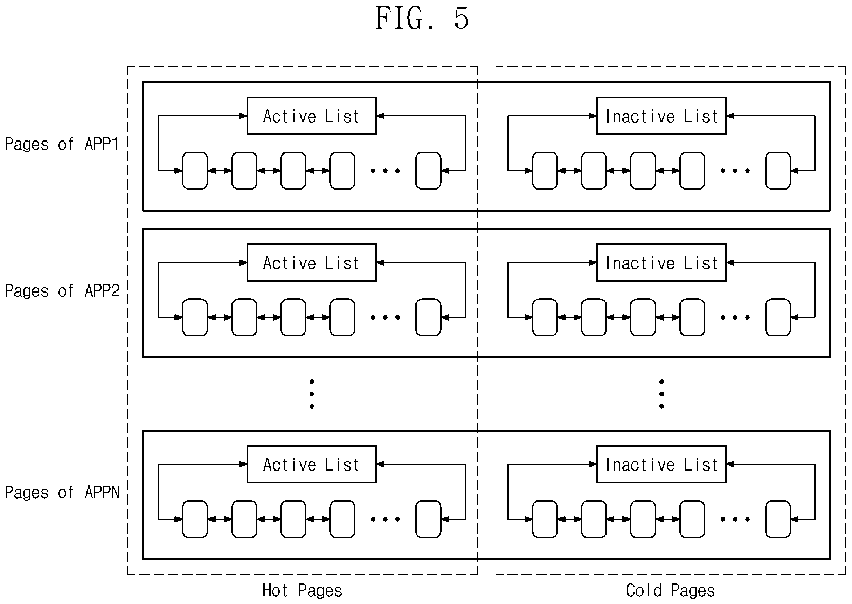

FIG. 5 is a schematic diagram illustrating an application-level LRU page management method according to an exemplary embodiment. Referring to FIG. 5, there are illustrated a plurality of APPs, that is, APP1, APP2, ......, APPN, respectively. Each application corresponds to an active list and an inactive list, wherein the active list is used for recording hot pages contained by the corresponding application, and the inactive list is used for recording cold pages contained by the corresponding application.

In some exemplary embodiments, hot and cold pages of different applications may vary greatly. If the pages of all applications are put together for hot and cold identification, it may cause the pages of some applications to be all identified as cold pages, thereby losing an opportunity to be migrated to the local DRAM, and this usages of pages of all applications for hot and cold identification may lead to a significant drop in the application performance. In some exemplary embodiments, cold and hot identification may be performed with respect to each application, so that hot pages and cold pages may be identified for each application, and further it is possible to ensure that each application may get a fairer opportunity to migrate hot pages to local DRAM, that is, each application may get a fairer opportunity to improve a performance.

Other than the above description of features of the page management method, the page management method of the active list and inactive list of each application may be similar to the LRU mechanism of the related art, that is, it is similar to the LRU page management method illustrated in FIG. 4, and thus is not repeated here.

According to an exemplary embodiment, in the case where it is detected that there is an initial page to be allocated to a memory device, the initial page may be allocated based on a QoS parameter of an application to which the initial page belongs and a type of the initial page, wherein the "initial page" is a page called based on a user's operation action on an application, or may also be a page called by an inner service of an application or the like.

Various exemplary embodiments may reserve a small part of a memory space in each of the local DRAM and CXL memory device as an Over Provisioning Memory (OPM). For example, a size of the OPM may be 5% of a size of the memory space of the corresponding memory device. The OPM in the local DRAM may be ensured for new pages and promoted pages, that is, memory allocation to pages promoted from the CXL memory device to the local DRAM is always successful; The OPM in the CXL memory device may be ensured for new pages and demoted pages, that is, memory allocation to pages demoted from the local DRAM to the CXL memory device is always successful.

According to an exemplary embodiment, a "PID-Application" Mapping Table may be provided to record correspondences of process IDs (PIDs) and applications.

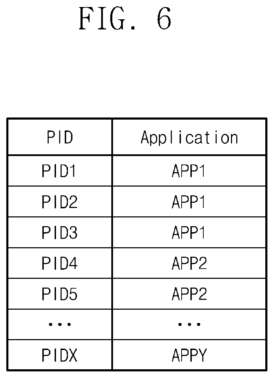

FIG. 6 is a schematic diagram illustrating "PID-Application Mapping Table" according to an exemplary embodiment. Referring to FIG. 6, process IDs PID1, PID2 and PID3 all correspond to APP1; process IDs PID4 and PID5 both correspond to APP2; and process ID PIDX corresponds to APPY, where X is an integer greater than or equal to six, and Y is an integer greater than or equal to three.

In this way, when a new page allocation request comes, that is, when it is detected that there is currently an initial page to be allocated to a memory device, a PID contained in the initial page may be determined at first, and further, which application the initial page belongs to is determined based on the PID contained in the initial page and the "PID-Application Mapping Table". According to an exemplary embodiment, the initial page may be added to a hot page list of the application to which the initial page belongs, i.e., to an active page list.

According to an exemplary embodiment, whether a type of the initial page is an anonymous type may be determined, wherein pages supported by backup files in Linux are called file pages, such as pages of code segments belonging to process, data segments, etc., and the anonymous type pages only need to be synchronized with dirty pages during memory reclamation (clean pages may be directly discarded); on the contrary, the anonymous type pages are anonymous pages, such as pages used by a stack of process and the like, and the anonymous type pages cannot be simply discarded, but need to be swapped to a swap partition or a swap file during the memory reclamation. In general, an anonymous page will be hotter than a file page, that is, an access frequency of an anonymous page will be higher than that of a file page.

In the case where the type of the initial page is an anonymous type, that is, in the case where an access frequency of the initial page is relatively high, the initial page may be allocated to a first memory device contained in the system for placement, wherein the first memory device has a relatively high access speed, for example, but not limited to, the first memory device is a memory device having an access speed higher than a setting among a plurality of memory devices; and otherwise, in the case where the access frequency of the initial page is relatively low, the initial page may be allocated based on a QoS parameter of an application to which the initial page belongs. The above-described "setting" may be "access speed higher than other memory devices", or may also be "access speed higher than a value", but exemplary embodiments are not specifically limited thereto. In some exemplary embodiments, the first memory device may be predetermined. In some exemplary embodiments, the setting may be predetermined. In some exemplary embodiments, the value may be predetermined.

In this way, in the case where an access frequency of an initial page is relatively high, the initial page may be allocated to a memory device with a higher access speed for placement, so that it is possible to ensure that frequently accessed pages may be accessed quickly, that is, an access rate of a page with relatively high access frequency may be guaranteed to be at a high level.

According to an exemplary embodiment, a current running performance state of the application to which the initial page belongs may be determined to obtain an abnormal performance parameter for evaluating a performance state of the application to which the initial page belongs, based on a QoS parameter of the application to which the initial page belongs.

In the case where the abnormal performance parameter of the application to which the initial page belongs is greater than or equal to a threshold, meaning that a performance of the corresponding application is relatively poor, the initial page may be allocated to the first memory device for placement, that is, the initial page may be allocated to a memory device with a higher access speed; otherwise, in the case where the abnormal performance parameter of the application to which the initial page belongs is less than the threshold, meaning that the performance of the corresponding application is relatively normal, the initial page may be allocated to a second memory device contained in the system for placement, wherein the second memory device has a relatively low access speed, for example, but not limited to, the second memory device may be a memory device with an access speed higher than the setting among a plurality of memory devices. In some embodiments, the threshold may be preset, and in some embodiments, the first and second memory devices may each be predetermined.

In this way, in the case where a performance of an application to which the initial page belongs is relatively poor, the initial page may be allocated to a memory device with a higher access speed for placement to improve the performance of the application to which the initial page belongs; and in the case where the performance of the application to which the initial page belongs is relatively good, it is unnecessary to allocate the memory device with the higher access speed to the initial page, that is, at this moment, even if a memory device with a lower access speed is allocated to the initial page, the performance of the application to which the initial page belongs will not be adversely affected. Thus, it may be ensured that the performances of different applications are maintained at a relatively balanced level.

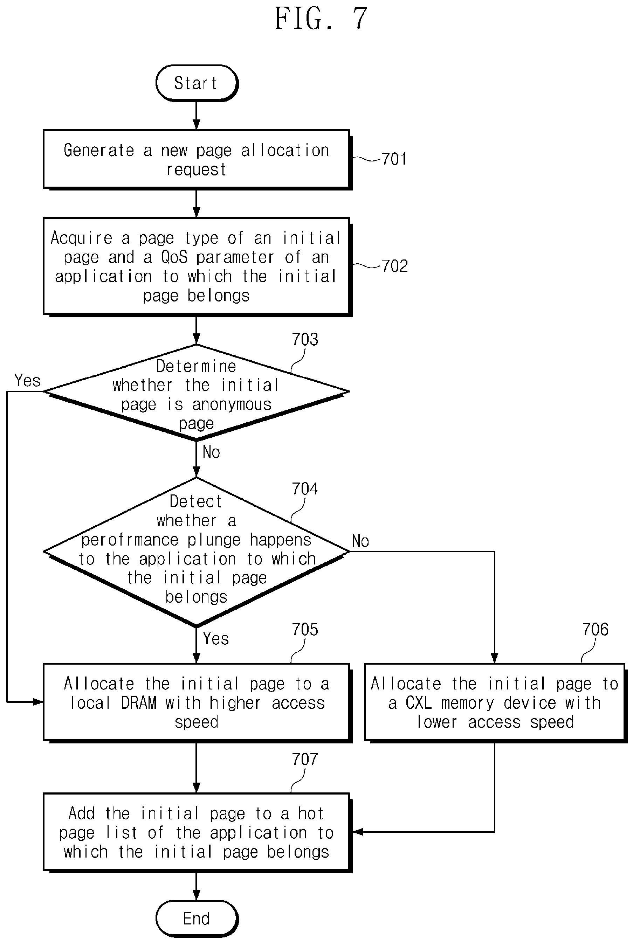

FIG. 7 is a flowchart illustrating an implementation of initial page allocation according to an exemplary embodiment.

Referring to FIG. 7, in step 701, a new page allocation request is generated. For example, an initial page to be allocated to a memory device is generated, wherein the "initial page" is a page called based on a user's operation action on an application, or may also be a page called by an inner service of an application or the like.

In step 702, a page type of an initial page and a QoS parameter of an application to which the initial page belongs are acquired. A "page type of the initial page" may be "anonymous page" or "file page", and an anonymous page will be generally hotter than a file page, that is, an access frequency of an anonymous page will be generally higher than that of a file page.

An abnormal performance parameter of the application to which the initial page belongs may be determined based on the QoS parameter of the application to which the initial page belongs, for example, the abnormal performance parameter may be anomaly score for evaluating a performance state of the application to which the initial page belongs. For example, the higher anomaly score means that a performance of the corresponding application is poorer; and the lower anomaly score means that the performance of the corresponding application is better.

In step 703, whether the initial page is an anonymous page is determined. In the case where the initial page is an anonymous page (703, Yes), step 705 is executed; and in the case where the initial page is not an anonymous page (703, No), step 704 is executed.

In step 704, whether a performance plunge happens to the application to which the initial page belongs is detected. In the case where the performance plunge happening to the application to which the initial page belongs is detected (704, Yes), the step 705 is executed; and in the case where it is detected that the performance plunge does not happen to the application to which the initial page belongs is detected (704, No), step 706 is executed.

In the step 705, the initial page is allocated to a local DRAM with a higher access speed.

In the step 706, the initial page is allocated to a CXL memory device with a lower access speed.

In step 707, the initial page is added to a hot page list of the application to which the initial page belongs, that is, an LRU active list.

In this way, in the case where an access frequency of an initial page is relatively high, the initial page may be allocated to a memory device with a higher access speed for placement, so that it is possible to ensure that frequently accessed pages may be accessed quickly, that is, an access rate of a page with relatively high access frequency may be guaranteed to be at a high level. In the case where a performance of an application to which the initial page belongs is poor, the initial page may be allocated to a memory device with a higher access speed for placement to improve the performance of the application to which the initial page belongs; and in the case where the performance of the application to which the initial page belongs is relatively good, it is unnecessary to allocate the memory device with the higher access speed to the initial page, that is, at this moment, even if a memory device with a lower access speed is allocated to the initial page, the performance of the application to which the initial page belongs will not be adversely affected. Thus, it may be ensured that the performances of different applications are maintained at a relatively balanced level.

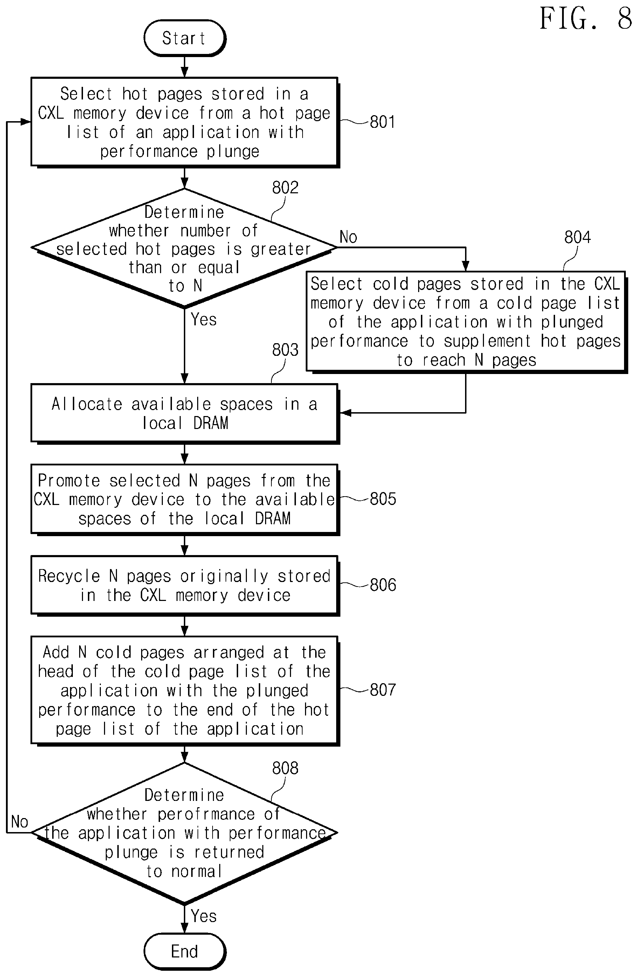

FIG. 8 is a flowchart illustrating an implementation of hot page promotion migration according to an exemplary embodiment. Referring to FIG. 8, the hot page promotion migration may be performed in an iterative manner. Specifically, for each iteration process, following operations may be performed:

In step 801, hot pages stored in a CXL memory device are selected from a hot page list of an application with a plunged performance.

In step 802, whether the number of hot pages that are selected is greater than or equal to N is determined. In the case where the number of the selected hot pages is greater than or equal to N (802, Yes), step 803 is executed; and in the case where the number of the selected hot pages is less than N (802, No), step 804 is executed.

In the step 803, available spaces are allocated in a local DRAM.

In the step 804, cold pages stored in the CXL memory device are selected from a cold page list of an application with a plunged performance to supplement the hot pages to make a total number of pages on which page promotion migration is performed reach N. After step 804, step 803 is performed.

In step 805, the selected N pages are promoted from the CXL memory device to an available space of the local DRAM.

In step 806, the N pages originally stored in the CXL memory device are recycled, that is, the N pages originally stored in the CXL memory device are deleted.

In step 807, N cold pages arranged at the head of the cold page list of the application with the plunged performance are added to the end of the hot page list of the application.

In step 808, whether a performance of the application with the plunged performance is returned to normal is determined. In the case where the performance of the application with the plunged performance is returned to normal (808, Yes), the iteration is terminated; and otherwise, in the case where the performance of the application with the plunged performance is not returned to normal (808, No), a next iteration is performed, that is, the process returns to the step 801, and steps 801 to 808 are performed again until the performance of the application with the plunged performance is returned to normal.

In this way, since a hot page belongs to a page having a higher access frequency, migrating a hot page of an application whose performance plunges from a CXL memory device to a local DRAM having a higher access speed may ensure improvement of the performance of the application.

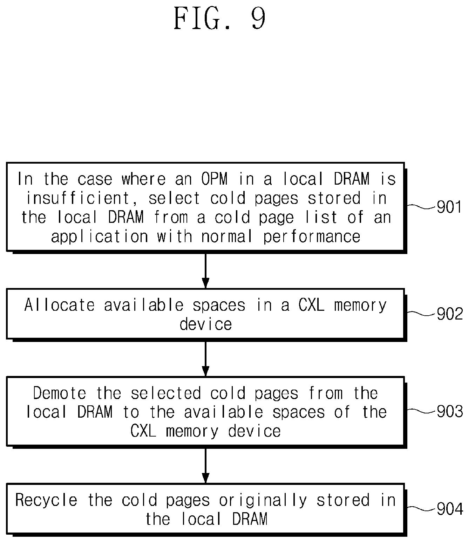

FIG. 9 is a flowchart illustrating an implementation of cold page demotion migration from a local DRAM to a CXL memory device according to an exemplary embodiment.

Referring to FIG. 9, in the case where an over provisioning memory OPM in a local DRAM is insufficient, cold pages stored in the local DRAM are selected from a cold page list of an application with a normal performance. In an exemplary embodiment, M cold pages may be selected. If the number of the selected cold pages is less than M, only the selected cold pages are demoted.

In step 902, available spaces are allocated in the CXL memory device, and since there is an OPM in the CXL memory device, memory allocation will be always successful.

In step 903, the selected cold pages are demoted from the local DRAM to the available spaces of the CXL memory device.

In step 904, the cold pages originally stored in the local DRAM are recycled, that is, the pages originally stored in the local DRAM are deleted.

In this way, exemplary embodiments may perform demotion migration advantageously on cold pages of an application whose performance is already normal, and then adverse effects on the corresponding application due to the demotion migration may be minimized to further ensure that the performances of different applications are maintained at a relatively balanced level. Further, after the cold pages are demoted, the cold pages originally stored in the local DRAM may be recycled, that is, the cold pages originally stored in the local DRAM may be deleted, and this recycling may also avoid repeated occupation of the same cold page of the memory space, in order to save memory resources.

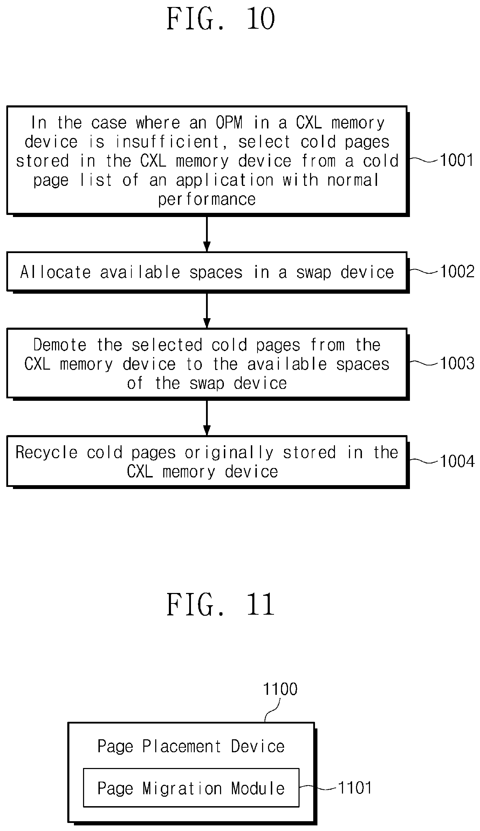

FIG. 10 is a flowchart illustrating an implementation of cold page demotion migration from a CXL memory device to a swap device according to an exemplary embodiment.

Referring to FIG. 10, in step 1001, in the case where an over provisioning memory OPM in a CXL memory device is insufficient, cold pages stored in the CXL memory device are selected from a cold page list of an application with a normal performance. In an exemplary embodiment, S cold pages may be selected. If the number of the selected cold pages is less than S, only the selected cold pages are demoted.

In step 1002, available spaces are allocated in a swap device.

In step 1003, the selected cold pages are demoted from the CXL memory device to the available spaces of the swap device.

In step 1004, the cold pages originally stored in the CXL memory device are recycled, that is, the cold pages originally stored in the CXL memory device are deleted.

In this way, exemplary embodiments may perform demotion migration advantageously on cold pages of an application whose performance is already normal, and adverse effects on the corresponding application due to the demotion migration may be minimized to further ensure that the performances of different applications are maintained at a relatively balanced level. Further, after the cold pages are demoted, the cold pages originally stored in the CXL memory device may be recycled, that is, the cold pages originally stored in the CXL memory device may be deleted, and this may also avoid repeated occupation of the same cold page of the memory space, in order to save memory resources.

FIG. 11 is a block diagram illustrating a page placement device according to an exemplary embodiment.

Referring to FIG. 11, a page placement device 1100 may include a page migration module 1101.

The page migration module 1101 may migrate a page of an application in a system based on a page temperature and a service quality parameter of the application in the system, in response to detecting a trigger event for performing the page migration, wherein the trigger event includes an event affecting a performance of the system. In some exemplary embodiments, the trigger event may be preset. In some exemplary embodiments, performing the page migration aims to improve or maintain a system performance. For example, when a system performance is found to be dropping or about to drop, the system performance is improved or maintained by performing the page migration. Pages of the applicant are divided into hot pages and cold pages according to a temperature, and the higher a frequency of access to a page, the hotter a temperature of the page.

The system may include a plurality of memory devices, and the page migration may include migrating a page from an original memory device in which the page is originally placed to a new memory device for placement, and an access speed of the original memory device is different from that of the new memory device. In some exemplary embodiments, the system may include three memory devices, for example, a local DRAM, a CXL memory device and a swap device, respectively. Further, an access speed of the local DRAM is higher than that of the CXL memory device, and an access speed of the CXL memory device is higher than that of the swap device.

According to an exemplary embodiment, the page migration module 1101 may perform the page migration according to a page temperature and an application performance. In some exemplary embodiments, the page migration module 1101 may determine a current running performance state of each application in the system to obtain an abnormal performance parameter for evaluating a performance state of the each application, based on the QoS parameter corresponding to the each application. For example, QoS indicators of all applications may be monitored in real time and specific values are recorded in a QoS information table. For each application, an isolation forest model may be established based on historical QoS data contained in the QoS information table of the application, and further current QoS data of each application may be input to the corresponding isolation forest model, and a current abnormal performance parameter of the application may be obtained. In some exemplary embodiments, the abnormal performance parameter may be an anomaly score. In some exemplary embodiments, the abnormal performance parameter may also be other types of parameters for representing an application performance in addition to an anomaly score. However, exemplary embodiments are not limited thereto, and the above-described embodiments are merely for exemplary illustration.

In some exemplary embodiments, in addition to an isolation forest model, other models may be further established to determine a current performance of an application. However, exemplary embodiments are not limited thereto, and the above-described embodiments are merely for exemplary illustration.

Then, the page migration module 1101 may determine a target application on which the page migration is to be performed, based on the abnormal performance parameter of the each application. Next, the page migration module 1101 may migrate a page of the target application based on a page temperature in the target application.

In this way, a QoS parameter corresponding to an application may truly reflect a quality of service of the application, and the QoS of the application may objectively reflect a performance state of the application. For example, if a QoS level of an application is relatively high, it means that a performance state of the application is relatively good; and if a QoS level of an application is relatively low, it means that the performance state of the application is relatively poor. Thus, accuracy and credibility of determining a current running performance state of an application based on a QoS parameter of the application are relatively high. That is, the performance state of the application may be described more objectively and accurately through the QoS parameter corresponding to the application.

In some exemplary embodiments, the page migration can be divided into two scenarios, that is: "a page promotion migration scenario in which pages are migrated to a new memory device with a higher access speed", and "a page demotion migration scenario in which pages are migrated to a new memory device with a lower access speed". Below, these two page migration scenarios will be illustrated separately.

According to an exemplary embodiment, the trigger event includes a performance of the application in the system dropping. For example, in the case where an abnormal performance parameter of a certain application is greater than or equal to a threshold, it may be considered that performance drop of the application happens. At this time, the page migration module 1101 may migrate hot pages in the target application from an original memory device to a new memory device having a higher access speed than the original memory device for placement, wherein the target application is an application having the abnormal performance parameter greater than or equal to the threshold. In some exemplary embodiments, the threshold may be preset. In some exemplary embodiments, the trigger event may be preset.

In some exemplary embodiments, the original memory device may be a CXL memory device, and the new memory device may be a local DRAM. When performance drop of an application is detected, hot pages of the application stored in the CXL memory device may be migrated to the local DRAM. Further, the above-described "drop" scenario may be further specifically refined to a "plunge" scenario, wherein "plunge" refers to a sudden and rapid drop in a performance of an application within a short time. In this way, since a hot page belongs to a page having a higher access frequency, migrating a hot page of an application whose performance drops to a new memory device having a higher access speed may ensure improvement in the performance of the application.

According to an exemplary embodiment, the trigger event may further include a remaining available space of a memory device in a system being insufficient. At this time, the page migration module 1101 may migrate cold pages of a target application in a memory device with an insufficient remaining available space from an original memory device to a new memory device having a lower access speed than the original memory device for placement, wherein the target application may be an application with an abnormal performance parameter lower than a threshold, and the target application may be an application with a normal performance. In some exemplary embodiments, the threshold may be preset. In some exemplary embodiments, the trigger event may be preset.

In some exemplary embodiments, in the case where a remaining available space of a local DRAM is insufficient, cold pages of a target application in the local DRAM with an insufficient remaining available space may be migrated from the local DRAM to a CXL memory device having a lower access speed than the local DRAM for placement; or in the case where a remaining available space of the CXL memory device is insufficient, cold pages of a target application in the CXL memory device with an insufficient remaining available space may be migrated from the CXL memory device to a swap device having a lower access speed than the CXL memory device for placement,

In some exemplary embodiments, since the page demotion migration is to be performed in the case where a remaining available space of a memory device in the system is insufficient, that is, the pages need to be migrated to a memory device with a lower access speed, this page demotion migration is bound to lead to the performance drop of the corresponding application. Therefore, a page migration strategy may be selected that has the least effect on an application performance. Specifically, compared to performing page demotion migration on an application whose performance is already poor, performing the page demotion migration on an application whose performance is already normal has a less adverse effect on the corresponding application; and, since an access frequency of a cold page is less than that of a hot page, an adverse effect on the corresponding application caused by the demotion migration on the cold page is less than the adverse effect on the corresponding application caused by the demotion migration on the hot page. Thus, some exemplary embodiments may perform demotion migration advantageously on cold pages of an application whose performance is already normal, and adverse effects on the corresponding application due to the demotion migration may be minimized to further ensure that the performances of different applications are maintained at a relatively balanced level.

According to an exemplary embodiment, the page placement device 1100 may further include a number determination module. The number determining module may determine a number of pages to be migrated based on a degree of performance drop of the system, wherein the degree of the performance drop of the system is positively correlated with the number of pages to be migrated.

In some exemplary embodiments, in a scenario where a performance of an application in a system drops, a number N of hot pages on which page promotion migration is performed may be selected according to a degree of performance drop of the application. For example, if the degree of performance drop is not severe, N may be set to 4; if the degree of performance drop is very severe, N may be set to 8, and the like. In some exemplary embodiments, in a scenario where a remaining available space of a memory device in the system is insufficient, a number M of cold pages on which page demotion migration is performed may be selected according to a consumption degree of a memory space of an original memory device. For example, if the consumption of the memory space is not severe, M may be set to 4; if the consumption of the memory space is very severe, M may be set to 8, and the like.

In this way, by making a degree of performance drop of a system positively correlated with the number of pages to be migrated, it is possible to ensure that a performance of an application whose performance drops may be improved as soon as possible; and it is possible to ensure that a remaining available space of a memory device reaches a threshold as soon as possible, and it is possible to further ensure that new page allocation/hot page promotion migration /cold page demotion migration may proceed smoothly. In some exemplary embodiments, the threshold event may be a preset requirement.

According to an exemplary embodiment, the page placement device 1100 may further include a page temperature identification module. That is, for each application among at least one application in a system, the page temperature identification module may perform page temperature identification on each application to obtain a hot page list and a cold page list of each application, wherein the hot page list contains hot pages of the application, and the cold page list contains cold pages of the application.

According to an exemplary embodiment, the page temperature identification module may determine whether each of a plurality of pages of a single application is a hot page or a cold page based on temperatures of the plurality of pages contained in the single application. In some exemplary embodiments, a median of a plurality of temperatures corresponding to the plurality of pages may be determined, and pages of which the temperatures are lower than the median may be determined as cold pages; and pages of which the temperatures are higher than the median may be determined as hot pages. In some exemplary embodiments, a temperature threshold may be further set, and pages of which the temperatures are lower than the temperature threshold are determined as cold pages; and pages of which the temperatures are higher than the temperature threshold may be determined as hot pages. The specific method for cold and hot page identification is not limited, and the above-described embodiments are only for exemplary illustration.

In various exemplary embodiments, cold and hot identification may be performed with respect to each application, so that hot pages and cold pages may be identified for each application, and further it is possible to ensure that each application may get a fairer opportunity to migrate hot pages to local DRAM, that is, each application may get a fairer opportunity to improve a performance.

According to an exemplary embodiment, the page placement device 1100 may further include a page allocation module.

In the case where it is detected that there is an initial page to be allocated to a memory device, the page allocation module may allocate the initial page based on a QoS parameter of an application to which the initial page belongs and a type of the initial page, wherein the "initial page" is a page called based on a user's operation action on an application, or may also be a page called by an inner service of an application or the like.

In various exemplary embodiments, a small part of a memory space may be reserved in each of the local DRAM and CXL memory device as an OPM. For example, a size of the OPM may be 5% of a size of the memory space of the corresponding memory device. The OPM in the local DRAM may be ensured for new pages and promoted pages, that is, memory allocation to pages promoted from the CXL memory device to the local DRAM is always successful; The OPM in the CXL memory device may be ensured for new pages and demoted pages, that is, memory allocation to pages demoted from the local DRAM to the CXL memory device is always successful.

According to an exemplary embodiment, the page allocation module may determine whether a type of the initial page is an anonymous type, wherein pages supported by backup files in Linux are called file pages, such as pages of code segments belonging to process, data segments, etc., and these pages only need to be synchronized with dirty pages during memory reclamation (clean pages may be directly discarded); on the contrary, they are anonymous pages, such as pages used by a stack of process and the like, and these pages cannot be simply discarded, but need to be swapped to a swap partition or a swap file during the memory reclamation. In general, an anonymous page will be hotter than a file page, that is, an access frequency of an anonymous page will be higher than that of a file page.

In the case where the type of the initial page is an anonymous type, that is, in the case where an access frequency of the initial page is relatively high, the page allocation module may allocate the initial page to a first memory device contained in the system for placement, wherein the first memory device has a relatively high access speed, for example, but not limited to, the first memory device is a memory device having an access speed higher than a setting among a plurality of memory devices; and otherwise, in the case where the access frequency of the initial page is relatively low, the page allocation module may allocate the initial page based on a QoS parameter of an application to which the initial page belongs. The above-described "setting" may be "access speed higher than other memory devices", or may also be "access speed higher than a value", and exemplary embodiments are not specifically limit thereto. In some exemplary embodiments, the first memory device may be predetermined. In some exemplary embodiments, the setting may be predetermined. In some exemplary embodiments, the value may be predetermined.

In this way, in the case where an access frequency of an initial page is relatively high, the initial page may be allocated to a memory device with a higher access speed for placement, so that it is possible to ensure that frequently accessed pages may be accessed quickly, that is, an access rate of a page with relatively high access frequency may be guaranteed to be at a high level.

According to an exemplary embodiment, the page allocation module may determine a current running performance state of the application to which the initial page belongs to obtain an abnormal performance parameter for evaluating a performance state of the application to which the initial page belongs, based on a QoS parameter of the application to which the initial page belongs.

In the case where the abnormal performance parameter of the application to which the initial page belongs is greater than or equal to a threshold, meaning that a performance of the corresponding application is relatively poor, the page allocation module may allocate the initial page to the first memory device for placement, that is, the initial page may be allocated to a memory device with a higher access speed; otherwise, in the case where the abnormal performance parameter of the application to which the initial page belongs is less than the threshold, meaning that the performance of the corresponding application is relatively normal, the page allocation module may allocate the initial page to a second memory device contained in the system for placement, wherein the second memory device has a relatively low access speed, for example, but not limited to, the second memory device may be a memory device with an access speed higher than the setting among a plurality of memory devices. In some exemplary embodiments, each of the first and second first memory devices may be predetermined. In some exemplary embodiments, the threshold may be predetermined. In some exemplary embodiments, the setting may be predetermined.

In this way, in the case where a performance of an application to which the initial page belongs is relatively poor, the initial page may be allocated to a memory device with a higher access speed for placement to improve the performance of the application to which the initial page belongs; and in the case where the performance of the application to which the initial page belongs is relatively good, it is unnecessary to allocate the memory device with the higher access speed to the initial page, that is, at this moment, even if a memory device with a lower access speed is allocated to the initial page, the performance of the application to which the initial page belongs will not be adversely affected. Thus, it may be ensured that the performances of different applications are maintained at a relatively balanced level.

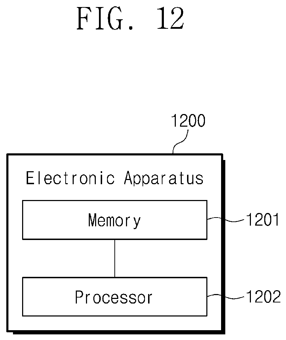

FIG. 12 is a block diagram illustrating an electronic apparatus 1200 according to an exemplary embodiment.

Referring to FIG. 12, the electronic apparatus 1200 may include at least one memory 1201 and at least one processor 1202. The at least one memory 1201 stores instructions or code that, when executed by the at least one processor 1202, cause the at least one processor to execute the page placement method according to one or more of the various exemplary embodiments described above with respect to FIGS. 1-10.

As an example, the electronic apparatus 1200 may be a PC computer, a tablet device, a personal digital assistant, a smart phone, or any other device capable of executing the above indication set or code. In an exemplary embodiment, the electronic apparatus 1200 does not have to be a single electronic apparatus, and may also be any aggregate of devices or circuits that can execute the above-mentioned indications (or indication sets) or code individually or jointly. In an exemplary embodiment, the electronic apparatus 1200 may be a part of an integrated control system or a system manager, or may be a portable electronic device configured to be interconnected with the local or remote (e.g., via wireless transmission) via interfaces.

In the electronic apparatus 1200, the processor 1202 may include a central processing unit (CPU), a graphics processing unit (GPU), a programmable logic device, a dedicated processor system, a microcontroller, and/or a microprocessor. In some exemplary embodiments, as an example rather than limitation, the processor may include an analog processor, a digital processor, a microprocessor, a multi-core processor, a processor array, a network processor, and/or the like.

The processor 1202 may run instructions or code stored in the memory 1201. In an exemplary embodiment, the memory 1201 may also store data. Instructions and data may also be transmitted and received over a network via a network interface device, wherein the network interface device may use a transmission protocol.

In some exemplary embodiments, the memory 1201 may be integrated with the processor 1202, for example, RAM or flash memory is arranged in an integrated circuit microprocessor or the like. In some exemplary embodiments, the memory 1201 may include a separate device, such as an external disk drive, a storage array, or any other storage device that can be used by a database system. The memory 1201 and the processor 1202 may be operatively coupled, or may communicate with each other, for example, through an I/O port, a network connection or the like, so that the processor can read files stored in the memory.

In some exemplary embodiments, the electronic apparatus 1200 may include a video display (such as a liquid crystal display) and a user interaction interface (such as a keyboard, a mouse, a touch input device, etc.). All components of the electronic apparatus 1200 may be connected to each other via a bus and/or a network.

According to an exemplary embodiment, there is further provided a computer readable storage medium that stores instructions or code, wherein the instructions or code stored in the computer readable storage medium, when accessed and executed by a processor of an electronic apparatus, cause the processor of the electronic apparatus to execute the page placement method according to one or more of the various exemplary embodiments described above with respect to FIGS. 1-10. Examples of the computer-readable storage medium here include: Read Only Memory (ROM), Random Access Programmable Read Only Memory (PROM), Electrically Erasable Programmable Read Only Memory (EEPROM), Random Access Memory (RAM), Dynamic Random Access Memory (DRAM), Static Random Access Memory (SRAM), flash memory, non-volatile memory, CD-ROM, CD-R, CD+R, CD-RW, CD+RW, DVD-ROM, DVD-R, DVD+R, DVD- RW, DVD+RW, DVD-RAM, BD-ROM, BD-R, BD-R LTH, BD-RE, Blu-ray or optical disc storage, Hard Disk Drive (HDD), Solid State Drive (SSD), card storage (such as, multimedia cards, secure digital (SD) cards or extreme speed digital (XD) cards), magnetic tapes, floppy disks, magneto-optical data storage devices, optical data storage devices, hard disks, solid state disks, and/or any other devices that are configured to store computer programs and code and any associated data, data files and data structures in a non-transitory manner and provide the computer programs and any associated data, data files and data structures to the processor or computer so that the processor or computer may execute the computer programs. The instructions or code or computer programs in the above-mentioned computer-readable storage medium my run in an environment deployed in a computer apparatus such as a client, a host, an agent device, a server, or the like. In one example, the computer program and any associated data, data files and data structures are distributed on networked computer systems, so that the computer programs and any associated data, data files and data structures are stored, accessed, and executed in a distributed manner through one or more processors or computers.

According to an exemplary embodiment, there may be further provided a computer program product including a computer program, wherein the computer program, when executed by a processor, implements the page placement method according to the present disclosure.

According to the page placement method and device, the electronic apparatus, the storage medium and the program product, while performing a page migration, not only a page temperature is considered, that is, not only whether a page is hot or cold is considered, but also a QoS parameter of an application is considered, that is, a service performance of the application is further considered, so that the application can perceive placement of the page. It is possible to avoid cases where performances of some applications are improved senselessly and where performances of some applications are reduced improperly due to the page migration method since only the page temperature is considered. That is, the page migration method provided by the present disclosure can ensure that the performances of different applications are in a relatively balanced state.

According to various exemplary embodiments, cold and hot identification may be performed with respect to each application, so that hot pages and cold pages may be identified for each application, and then it is possible to ensure that each application may get a fairer opportunity to migrate hot pages to local DRAM, that is, each application may get a fairer opportunity to improve a performance.

According to various exemplary embodiments, a QoS parameter corresponding to an application may truly reflect a quality of service of the application, and the QoS of the application may objectively reflect a performance state of the application. For example, if a QoS level of an application is relatively high, it means that a performance state of the application is relatively good; and if a QoS level of an application is relatively low, it means that the performance state of the application is relatively poor. Thus, accuracy and credibility of determining a current running performance state of an application based on a QoS parameter of the application are relatively high. That is, the performance state of the application may be described more objectively and accurately through the QoS parameter corresponding to the application.

According to various exemplary embodiments, since a hot page belongs to a page having a high access frequency, migrating a hot page of an application of which a performance drops to a new memory device having a higher access speed may ensure improvement in the performance of the application.

According to various exemplary embodiments, after the hot pages are promoted, the hot pages in the original memory device may be recycled, that is, the hot pages originally placed in the original memory device may be deleted, and this recycling may avoid repeated occupation of the same hot pages of the memory space, in order to save memory resources.

According to various exemplary embodiments, the higher the isolation forest anomaly score, the more sever the degree of the performance drop of the corresponding application, and the more urgent the need for performing the page promotion migration on the corresponding application. Therefore, starting from the application with the highest isolation forest anomaly score, the page promotion migration may be performed on each of sorted target applications one by one, and this may ensure that the promotion migration may be advantageously performed on the application with the most severe performance drop, that is, it may ensure that performance improvement may be advantageously performed on the application with the most severe performance drop, to avoid the situation where the application with the most severe performance drop has not got an opportunity for performance improvement for a long time, and it may ensure that the performances of different applications are maintained at a relatively balanced level.

According to various exemplary embodiments, demotion migration may be advantageously performed on cold pages of applications whose performances are already normal, and adverse effects on the corresponding applications due to the demotion migration may be minimized to further ensure that the performances of different applications are maintained at a relatively balanced level.

According to various exemplary embodiments, after the cold pages are demoted, the cold pages in the original memory device may be recycled, that is, the cold pages originally placed in the original memory device may be deleted, and this recycling may avoid repeated occupation of the same cold pages of the memory space, in order to save memory resources.

According to various exemplary embodiments, the page demotion migration may be performed on each of sorted target applications one by one by starting from an application with the lowest isolation forest anomaly score, that is, the page demotion migration may be performed on each sorted target application by starting from an application with a most normal performance, and this may avoid the occurrence of the case where sharp deterioration in performances of applications caused by directly performing the page demotion migration on some applications whose performances are already poor, to further ensure that the performances of different applications are maintained at a relatively balanced level.

According to various exemplary embodiments, by making a degree of performance drop of a system positively correlated with the number of pages to be migrated, it is possible to ensure that a performance of an application whose performance drops may be improved as soon as possible; and it is possible to ensure that a remaining available space of a memory device reaches a threshold as soon as possible, and it is possible to further ensure that new page allocation/hot page promotion migration /cold page demotion migration may proceed smoothly.

According to various exemplary embodiments, in the case where an access frequency of an initial page is relatively high, the initial page may be allocated to a memory device with a higher access speed for placement, so that it is possible to ensure that frequently accessed pages may be accessed quickly, that is, an access rate of a page with relatively high access frequency may be guaranteed to be at a high level.

According to various exemplary embodiments, in the case where a performance of an application to which the initial page belongs is relatively poor, the initial page may be allocated to a memory device with a higher access speed for placement to improve the performance of the application to which the initial page belongs; and in the case where the performance of the application to which the initial page belongs is relatively good, it is unnecessary to allocate the memory device with the higher access speed to the initial page, that is, at this moment, even if a memory device with a lower access speed is allocated to the initial page, the performance of the application to which the initial page belongs will not be adversely affected. Thus, it may be ensured that the performances of different applications are maintained at a relatively balanced level.

Those skilled in the art will easily conceive of other implementation solutions of the present disclosure after considering the description and practicing the various exemplary embodiments described herein. The appended claims are intended to cover any modifications, uses, or adaptive changes of various exemplary embodiments described herein. These modifications, uses, or adaptive changes follow the general principles of the present disclosure and include common knowledge or customary technical means in the technical field that are not disclosed by the present disclosure. The description and the embodiments are only regarded as exemplary, and the true scope and spirit of the present disclosure are indicated by the claims below.

It should be understood that the present disclosure is not limited to the above-described accurate structures as illustrated in the accompanying drawings, and various modifications and changes may be made without departing from the scope thereof. The scope of the present disclosure is only defined by the appending claims.

## Claims

1. A page placement method comprising:
migrating a page of a plurality of pages of an application in a system based on a page temperature and a quality of service (QoS) parameter of the application in the system, in response to detecting a trigger event for performing a page migration, the trigger event comprising an event affecting a performance of the system;
wherein:
the plurality of pages of the application are divided into a hot page and a cold page according to a temperature, and a page having a higher frequency of access has a hotter temperature,
the system comprises a plurality of memory devices,
the page is migrated from an original memory device in which the page is originally placed to a new memory device, among the plurality of memory devices, and
an access speed of the original memory device is different from an access speed of the new memory device.

2. The page placement method of claim 1, wherein the migrating comprises:
determining a current running performance state of each application of a plurality of applications in the system to obtain an abnormal performance parameter for evaluating a performance state of the application, based on the QoS parameter corresponding to each application;
determining a target application for the page migration, based on the abnormal performance parameter of each application; and
migrating a page of the target application based on a page temperature in the target application.

3. The page placement method of claim 2, wherein:
the trigger event comprises a performance of the application in the system dropping;
the migrating of the page of the target application comprises migrating a hot page in the target application from the original memory device to the new memory device having a higher access speed than the original memory device, and
the target application is an application having the abnormal performance parameter greater than or equal to a threshold.

4. The page placement method of claim 2, wherein:
the trigger event comprises a remaining available space of the memory device of the system being insufficient;
the migrating of the page of the target application comprises migrating a cold page of the target application in a memory device having an insufficient remaining available space from the original memory device to the new memory device having a lower access speed than the original memory device, and
the target application is an application having the abnormal performance parameter lower than a threshold.

5. The page placement method of claim 1, further comprising:
for each application among at least one application in the system, performing a page temperature identification for the application to obtain a hot page list and a cold page list of the application,
wherein the hot page list contains hot pages of the application, and the cold page list contains cold pages of the application.

6. The page placement method of claim 5, wherein performing the page temperature identification comprises determining whether each of a plurality of pages of a single application is a hot page or a cold page, based on temperatures of the plurality of pages contained in the single application.

7. The page placement method of claim 1, further comprising determining a number of pages to be migrated based on a degree of performance drop of the system, the degree of the performance drop of the system being positively correlated with the number of pages to be migrated.

8. The page placement method of claim 1, further comprising:
when there is an initial page to be allocated to a memory device, allocating the initial page based on a QoS parameter of an application to which the initial page belongs and based on a type of the initial page.

9. The page placement method of claim 8, wherein allocating the initial page comprises:
determining whether the type of the initial page is an anonymous type;
when the type of the initial page is the anonymous type, allocating the initial page to a first memory device among the plurality of memory devices in the system, that has an access speed higher than a setting; and
when the type of the initial page is not the anonymous type, allocating the initial page based on the QoS parameter of the application to which the initial page belongs.

10. The page placement method of claim 9, wherein allocating the initial page based on the QoS parameter comprises:
determining a current running performance state of the application to which the initial page belongs to obtain an abnormal performance parameter for evaluating a performance state of the application to which the initial page belongs, based on the QoS parameter of the application to which the initial page belongs;
allocating the initial page to the first memory device, when the abnormal performance parameter of the application to which the initial page belongs is greater than or equal to a threshold; and
allocating the initial page to a second memory device among the plurality of memory devices in the system that has an access speed lower than the setting, when the abnormal performance parameter is less than the threshold.

11. A page placement device comprising a memory and a processor configured to implement:
a page migration module configured to perform page migration to migrate a page among a plurality of pages of an application in a system based on a page temperature and a QoS parameter of the application in the system, in response to detecting a trigger event for performing a page migration, the trigger event comprising an event affecting a performance of the system;
wherein:
the plurality of pages of the application are divided into a hot page and a cold page according to a temperature,
a page having a higher frequency of access has a hotter temperature;
the system comprises a plurality of memory devices, and
the page migration comprises migrating the page from an original memory device in which the page is originally placed to a new memory device, an access speed of the original memory device being different from an access speed of the new memory device.

12. The page placement device of claim 11, wherein the page migration module is configured to:
determine a current running performance state of each application of a plurality of applications in the system to obtain an abnormal performance parameter for evaluating a performance state of the application, based on the QoS parameter corresponding to the application;
determine a target application for the page migration, based on the abnormal performance parameter of the application; and
migrate a page of the target application based on a page temperature in the target application.

13. The page placement device of claim 12, wherein:
the trigger event comprises a performance of the application in the system dropping;
the page migration module is configured to migrate a hot page in the target application from the original memory device to the new memory device having a higher access speed than the original memory device, and
the target application is an application having the abnormal performance parameter greater than or equal to a threshold.

14. The page placement device of claim 12, wherein:
the trigger event comprises a remaining available space of the memory device of the system being insufficient;
the page migration module is configured to migrate a cold page of the target application in a memory device having an insufficient remaining available space from the original memory device to the new memory device having a lower access speed than the original memory device, and
the target application is an application having the abnormal performance parameter lower than a threshold.

15. The page placement device of claim 11, wherein:
the page migration module is configured to, for each application among at least one application in the system, perform page temperature identification on the application to obtain a hot page list and a cold page list of the application,
the hot page list contains hot pages of the application, and
the cold page list contains cold pages of the application.
